(19) Europäisches Patentamt / European Patent Office / Office européen des brevets

(11) **EP 4 763 587 A1**

(12) # EUROPEAN PATENT APPLICATION

(43) Date of publication:
24.06.2026 Bulletin 2026/26

(21) Application number: 25176515.2

(22) Date of filing: **14.05.2025**

(51) International Patent Classification (IPC):
**B60L 53/10** (2019.01)    **B60L 53/62** (2019.01)
**B60L 53/63** (2019.01)    **H02J 3/26** (2026.01)
**H02J 7/04** (2006.01)

(52) Cooperative Patent Classification (CPC):
**B60L 53/62; B60L 53/11; B60L 53/63; H02J 3/26; H02J 7/04;** H02J 2105/37

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.12.2024 CN 202411860492**

(71) Applicant: **Sichuan Injet New Energy Co., Ltd.
Deyang, Sichuan (CN)**

(72) Inventors:
• **ZHAO, QIANG
Deyang City (CN)**
• **WANG, GUANQI
Deyang City (CN)**

(74) Representative: **Valet Patent Services Limited
c/o Caya 83713X
Am Börstig 5
96052 Bamberg (DE)**

(54) **CONTROL METHOD FOR INDEPENDENTLY ADJUSTING THREE-PHASE CURRENT OF DIRECT CURRENT CHARGING INPUT OF ELECTRIC VEHICLE**

(57) Disclosed is a control method for independently adjusting three-phase current of direct current charging input of an electric vehicle. The present application adopts a control system, including a distribution box, which is connected to a charging pile and other loads. The control method includes calculating available current for phases of the charging pile, communicating an energy management system with the charging pile, calculating input limit currents of phases, calculating actually required output power of the charging pile, comparing the available power of the charging pile with the actually required output power, calculating average current of other loads of phased of the charging pile and the average required input current of phases, and performing charging distribution on phases of the charging pile. Therefore, the currents of phases of the distribution box is fully utilized for charging to improve the charging efficiency.

FIG. 1

## Description

## BACKGROUND

### 1. TECHNICAL FIELD

The present application relates to the technical field of electric vehicle charging control, and in particular, to a control method for independently adjusting three-phase current of direct current charging input of an electric vehicle.

### 2. Description of Related Art

A current charging pile, when charging an electric vehicle, ensures that input phase currents keep the same, and the maximum current of a distribution box remains constant. When other loads connected to the same distribution box (i.e., non-electric vehicle charging loads) exhibit phase current imbalance, the charging pile merely adjusts the charging current according to the maximum current of the distribution box minus the maximum load phase current. If the maximum load phase current is very close to the maximum current of the distribution box, even if the phase currents of other loads are small, the charging pile has no excess power to charge the electric vehicle.

## SUMMARY

Aiming at the foregoing problems, the present application provides a control method for independently adjusting three-phase current of direct current charging input of an electric vehicle, which can charge the electric vehicle by fully using phase currents of a distribution box and improve the charging efficiency.

To achieve an objective of the present application, the present application adopts the following solution.

A control method for independently adjusting three-phase current of direct current charging input of an electric vehicle adopts a control system, the control system includes a distribution box, the distribution box is connected to a charging pile and other loads, and an energy management system for real-time communication with the charging pile is provided in the distribution box. The control method includes the following steps:

S100: collecting other load currents $I_{CT1}$, $I_{CT2}$ and $I_{CT3}$ for phases of the distribution box by the energy management system, and calculating available currents for phases of the charging pile: $I_{L1}=I_{MAX}-I_{CT1}$, $I_{L2}=I_{MAX}-I_{CT2}$, $I_{L3}=I_{MAX}-I_{CT3}$, wherein $I_{MAX}$ is single-phase maximum output current of the distribution box;

S200: communicating the energy management system with the charging pile and outputting $I_{L1}$, $I_{L2}$ and $I_{L3}$ to the charging pile;

S300: calculating input limiting currents for phases by the charging pile separately: $I_{X1}=Min(I_{L1},I_{RAT})$, $I_{X2}=Min(I_{L2},I_{RAT})$, $I_{X3}=Min(I_{L3},I_{RAT})$, wherein $I_{RAT}$ is single-phase rated input current of the charging pile;

S400: calculating actually required output power $P_{OUT}=Min(P_{RAT},P_{REQ})$ of the charging pile, wherein $P_{RAT}$ is rated output power of the charging pile, and $P_{REQ}$ is requested power of the electric vehicle;

S500: calculating available power $P_{DC}$ of the charging pile, determining whether the available power $P_{DC}$ is greater than $P_{OUT}$, if not, taking the input limiting currents $I_{X1}$, $I_{X2}$ and $I_{X3}$ for phases as input control currents $I_{IN1}$, $I_{IN2}$ and $I_{IN3}$ for phases of the charging pile respectively to charge the electric vehicle and then returning to the S100, and if yes, continuing the following steps;

S600: calculating average current of other loads for phases of the distribution box: $I_{LAVG}=(I_{CT1}+I_{CT2}+I_{CT3})/3$, and calculating required average input current for phases of the charging pile:$I_{AVG}=P_{OUT}/3/U/\eta$;

S700: setting $I_{CAL1}=I_{LAVG}-I_{CT1}+I_{AVG}$ to make input control current $I_{IN1}=Min(I_{CAL1},I_{RAT})$ for phase A of the charging pile;

S800: determining whether $I_{CAL1}>I_{RAT}$, if so, firstly calculating required average input current for phase B and phase C of the charging pile: $I_{AVG}=I_{AVG}+(I_{CAL1}-I_{RAT})/2$ and then continuing the following steps, and if not, directly continuing the following steps;

S850: setting $I_{CAL2}=I_{LAVG}-I_{CT2}+I_{AVG}$ to make input control current $I_{IN2}=Min(I_{CAL2},I_{RAT})$ for phase B of the charging pile;

S900: determining whether $I_{CAL2}>I_{RAT}$, if so, firstly calculating required input current for phase C of the charging pile: $I_{AVG}=I_{AVG}+(I_{CAL2}-I_{RAT})$ and then continuing the following steps, and if not, directly continuing the following steps; and

S950: setting $I_{CAL3}=I_{LAVG}-I_{CT3}+I_{AVG}$ to make input control current $I_{IN3}=Min(I_{CAL3},I_{RAT})$ for phase C of the charging pile and then returning to the S100, wherein the S100 to the S950 are executed in a continuous loop.

Further, a current transformer configured to collect other load currents in the S100 is a split-core current transformer. The distribution box in the control system includes:

a box body including a housing fixed on a cement floor, wherein a bottom end and one side surface of the housing are both provided with openings, a box door is assembled at the opening at the side surface of the housing, a bottom groove is formed in the cement floor below the opening at the bottom end of the housing, a plurality of cable pass-through panels are arranged in the bottom groove and configured to route cables connected to a charging pile and other loads from the distribution box, a plurality of groups of side mounting holes are formed at one side wall in the housing, each group of side mounting holes are configured to temporarily store one split-core current transformer, a plurality of groups of clamping plates are further arranged on one side wall in the housing, cables configured to connect devices in the distribution box are clamped on an inner side of each clamping plate, and a plurality of side guide rails are arranged on another side wall in the housing and configured to temporarily store an air switch;

a circuit function unit arranged in the box body and close to an inner end wall of the housing, wherein the circuit function unit includes an inner plate, a controller is embedded on the inner plate, the energy management system is arranged in the controller, three phase splitters configured to distribute phases of three-phase electricity and a neutral terminal block are connected below the controller, a plurality of groups of inner mounting holes are formed below the phase splitters and configured to assemble the split-core current transformer, a plurality of inner guide rails are also arranged on the inner plate and configured to assemble the air switch, an input terminal of the air switch on each inner guide rail is connected to the phase splitter or the neutral terminal block via a cable, and an output terminal of the air switch is connected to the charging pile or other loads via a cable;

a wiring unit arranged on an inner side surface of the box door, configured to connect cables in the distribution box, and including a plurality of cameras and at least two manipulators, wherein a wiring assembly is arranged at a movable end of each manipulator;

a switch transfer mechanism arranged at a top in the box body and configured to transfer the air switch between an inner side wall of the housing and a circuit function unit;

a transformer transfer mechanism arranged at a top in the box body and configured to transfer the split-core current transformer between an inner side wall of the housing and a circuit function unit;

after the S950 is executed, before returning to the S100, the control method further includes: adding, reducing or replacing a group of devices on the circuit function unit by the wiring unit, the switch transfer mechanism and the transformer transfer mechanism at a time interval t. In a case that other loads connected to one phase output by the distribution box are added, reduced or replaced, when the S100 is executed next time, the other load currents collected by the phase is a sum of updated currents of the other loads connected to the phase;

the adding a group of devices on the circuit function unit includes the following steps:

A100: removing the air switch temporarily stored on the side guide rail by the switch transfer mechanism, then moving and assembling the air switch to the inner guide rail;

A200: pulling out the cable arranged in the cable pass-through panel upwards by the wiring unit, and then connecting the cable into a wire hole at a lower end of the air switch in the A100;

A300: if the air switch assembled in the A100 is configured to control at phase input terminals of other loads, executing A310: removing a plurality of split-core current transformers temporarily stored at an outer side of the side mounting hole by the transformer transfer mechanism, moving and assembling the split-core current transformers to an outer side of the inner mounting hole, opening a movable portion of the split-core current transformer by the wiring unit, taking out the cable arranged in the inner side of the clamping plate, connecting one end of the cable to a wire hole at an upper end of the air switch and another end to an output terminal of the phase splitter, making the cable pass through a fixed portion of the split-core current transformer, and then closing the split-core current transformer;

if the air switch assembled in the A100 is configured to control at neutral input terminals of other loads, executing A320: taking out the cable arranged in the inner side of the clamping plate by the wiring unit, and then connecting one end of the cable to a wire hole at an upper end of the air switch and another end to an output terminal of the neutral terminal block;

the reducing a group of devices on the circuit function unit includes the following steps:

B100: if the air switch in the group of devices is configured to control at phase line input terminals of other loads, executing B110: opening a movable portion of the split-core current transformer by the wiring unit, disconnecting one end of a cable in the split-core current transformer from a wire hole at an upper end of the air switch and another end from an output terminal of the phase splitter, moving the cable and clamping the cable into an inner side of a group of clamping plates, closing the split-core current transformer, removing the split-core current transformer from an outer side of the inner mounting hole by the transformer transfer mechanism, and then moving and assembling the split-core current transformer to an outer side of the side mounting hole;

if the air switch in the group of devices is configured to control at neutral input terminals of other loads, executing B120: disconnecting one end of a cable from a wire hole at an upper end of the air switch and another end from an output terminal of the neutral terminal block by the wiring unit, and then moving the cable and clamping the cable into an inner side of a group of clamping plates;

B200: disconnecting a cable from a wire hole at a lower end of the air switch in the B100 by the wiring unit;

B300: removing the air switch in the B100 from the inner guide rail by the switch transfer mechanism, and then moving and assembling the air switch to the side guide rail;

The replacing a group of devices on the circuit function unit includes the following steps:

removing the group of devices on the circuit function unit by the B100-B300; and

mounting a new group of devices on the circuit function unit by the A100-A300.

The beneficial effects of the technical solution are as follows:

1. When the total capacity of the distribution box remains unchanged, the charging pile may make full use of the remaining capacity to charge electric vehicles, which improves charging efficiency, shortens charging time, and fully meets the charging requirements of electric vehicles.

2. By communicating with the energy management system, the charging pile automatically adjusts the input currents of phases without affecting the power demand of other loads.

3. When other loads are added to the distribution system, it is not necessary to expand the distribution capacity of the distribution system. The charging pile automatically adjusts the input currents of phases based on the load current data of phases that interacts in real time with the energy management system.

4. The distribution box temporarily stores cables, split-core current transformers and air switches for expansion, which is convenient for subsequent load additions, has strong flexibility and can automatically add and replace devices inside the distribution box without manual operation, so that the safety is improved.

## BRIEF DESCRIPTION OF DRAWINGS

FIG. 1 is a schematic circuit diagram of a control system according to an embodiment of the present application.

FIG. 2 is a main flowchart of a control method according to an embodiment of the present application.

FIG. 3 is an overall perspective view of a distribution box according to an embodiment of the present application.

FIG. 4 is a partial perspective view I of an internal structure of a distribution box according to an embodiment of the present application.

FIG. 5 is a partial perspective view II of an internal structure of a distribution box according to an embodiment of the present application.

FIG. 6 is an enlarged view of a portion A in FIG. 5 according to an embodiment of the present application.

FIG. 7 is an enlarged view of a portion B in FIG. 5 according to an embodiment of the present application.

FIG. 8 is a partial perspective view III of an internal structure of a distribution box according to an embodiment of the present application.

FIG. 9 is an enlarged view of a portion C in FIG. 8 according to an embodiment of the present application.

FIG. 10 is an internal front view of a distribution box according to an embodiment of the present application.

FIG. 11 is a perspective view of a wiring assembly of a distribution box according to an embodiment of the present application.

FIG. 12 is a perspective view of a switch transfer mechanism of a distribution box according to an embodiment of the present application.

FIG. 13 is a partial diagram of a switch transfer mechanism of a distribution box according to an embodiment of the present application.

FIG. 14 is a perspective view of a transformer transfer mechanism of a distribution box according to an embodiment of the present application.

FIG. 15 is a partial view of a transformer transfer mechanism of a distribution box according to an embodiment of the present application.

FIG. 16 is an enlarged view of a portion D in FIG. 15 according to an embodiment of the present application.

Reference numerals: 1: box body, 11: housing, 12: box door, 13: handle, 14: top plate, 15: bottom groove, 16: cable pass-through panel, 161: cable pass-through hole, 17: side mounting hole, 18: bottom rod, 181: clamping plate, 19: side guide rail, 20: circuit function unit, 21: inner plate, 22: controller, 23: phase splitter, 231: phase splitting screw, 24: neutral terminal block, 241: neutral terminal screw, 25: inner mounting hole, 26: inner guide rail, 30: wiring unit, 301: camera, 302: manipulator, 3: wiring assembly, 31: mounting plate, 32: mounting hole, 33: first linear mechanism, 34: hanging plate, 35: first rotating motor, 36: first screwdriver bit, 37: second linear mechanism, 38: air clamp, 4: switch transfer mechanism, 40: first moving assembly, 41: third linear mechanism, 42: fourth linear mechanism, 43: fifth linear mechanism, 44: second rotating motor, 45: T-shaped frame, 451: upper clamping block, 46: sixth linear mechanism, 47: first horizontal plate, 471: lower clamping block, 48: seventh linear mechanism, 481: second horizontal plate, 49: eighth linear mechanism, 491: inverted-L-shaped block, 5: transformer transfer mechanism, 50: second moving assembly, 51: ninth linear mechanism, 511: vertical plate, 52: tenth linear mechanism, 521: third rotating motor, 522: eleventh linear mechanism, 53: fourth rotating motor, 531: L-shaped frame, 54: C-shaped plate, 55: twelfth linear mechanism, 56: thirteenth linear mechanism, 561: motor base, 562: L-shaped plate, 57: fifth rotating motor, 58: first gear, 59: second gear, 591: second screwdriver bit, 592: rotating rod, 6: cable, 61: end hole, 7: split-core current transformer, 71: fixing screw, 72: split screw, 8: air switch, 81: pressing screw, and 82: latch.

## DETAILED DESCRIPTION OF EMBODIMENTS

To make the objectives, technical solutions and advantages of the present application clearer, the implementations of the present application are described in detail below. The embodiments described in the present application are only part of the embodiments of the present application, rather than all the embodiments.

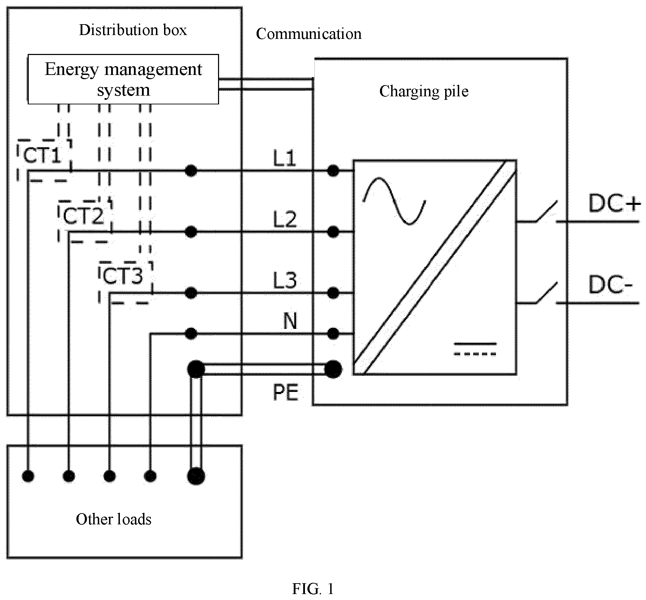

A control method for independently adjusting three-phase current of direct current charging input of an electric vehicle adopts a control system shown in FIG. 1, the control system includes a distribution box, and the distribution box is connected to a charging pile and other loads. Specifically, the other loads include lighting equipment and cooling fans that use three-phase alternating current power output by the charging pile. An energy management system in real time communication with the charging pile is arranged in the distribution box, and the energy management system is connected to three groups of current transformers configured to monitor phase currents used by other loads. Specifically, the number of current transformers in each group of current transformers connected to the energy management system is equal to the number of other loads connected to phases of the distribution box, and the current transformers are represented by CT1, CT2 and CT3 in FIG. 1. The charging pile inputs three-phase alternating current from the distribution box via cables, and the cables are represented by L1, L2 and L3 in FIG. 1. In this embodiment, the conversion device is a rectifier. More specifically, a neutral wire is connected between the distribution box and the charging pile, a neutral wire is also connected between the distribution box and other loads, the control system is grounded through a ground wire, and the neutral wire and the ground wire are represented by N and PE in FIG. 1.

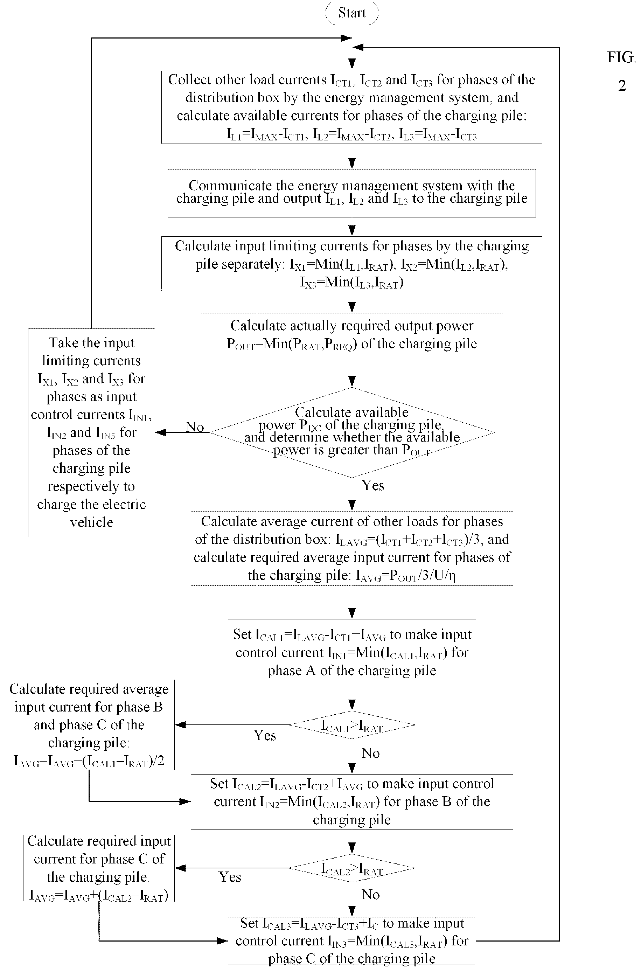

The control method as shown in FIG. 2 includes the following steps:

S100: collecting other load currents $I_{CT1}$, $I_{CT2}$ and $I_{CT3}$ for phases of the distribution box by the energy management system, wherein $I_{CT1}$ is equal to the sum of currents for phase A of other loads measured by a first group of current transformers, $I_{CT2}$ is equal to the sum of currents for phase B of other loads measured by a second group of current transformers, and $I_{CT3}$ is equal to the sum of currents for phase C of other loads measured by a third group of current transformers, specifically, the current transformer in this embodiment is a split-core current transformer, and calculating available currents for phases of the charging pile: $I_{L1}=I_{MAX}-I_{CT1}$, $I_{L2}=I_{MAX}-I_{CT2}$ and $I_{L3}=I_{MAX}-I_{CT3}$, wherein $I_{MAX}$ is single-phase maximum output current of the distribution box and may be configured manually;

S200: communicating the energy management system with the charging pile and outputting $I_{L1}$, $I_{L2}$ and $I_{L3}$ to the charging pile;

S300: calculating input limiting currents for phases by the charging pile separately: $I_{X1}=Min(I_{L1},I_{RAT})$, $I_{X2}=Min(I_{L2},I_{RAT})$, $I_{X3}=Min(I_{L3},I_{RAT})$, wherein $I_{RAT}$ is single-phase rated input current of the charging pile;

S400: calculating actually required output power $P_{OUT}=Min(P_{RAT},P_{REQ})$ of the charging pile, wherein $P_{RAT}$ is rated output power of the charging pile, and $P_{REQ}$ is requested power of the electric vehicle; wherein in this embodiment, when a charging connector of the charging pile is plugged into a charging interface of the vehicle, communication connection may be established between the charging pile and the vehicle to obtain $P_{REQ}$, and in other embodiments, the vehicle model may also be identified by mounting a camera 301 next to the charging pile for image recognition or by mounting a wireless radio frequency identification on the vehicle, so as to further identify $P_{REQ}$;

S500: calculating available power $P_{DC}$ of the charging pile, determining whether the available power $P_{DC}$ is greater than $P_{OUT}$, if not, taking the input limiting currents $I_{X1}$, $I_{X2}$ and $I_{X3}$ for phases as input control currents $I_{IN1}$, $I_{IN2}$ and $I_{IN3}$ for phases of the charging pile respectively to charge the electric vehicle and then returning to the S100, and if yes, continuing the following steps; specifically, calculating $P_{DC}$ by the following formula: $P_{DC}=\eta \times U \times (I_{X1}+I_{X2}+I_{X3})/\sqrt{3}$, wherein $\eta$ is conversion efficiency of the charging pile, provided by a charging pile manufacturer, or obtained by testing before use, U is line voltage, and in the control system of this embodiment, U=380V of the charging pile is input;

S600: calculating average current of other loads for phases of the distribution box: $I_{LAVG}=(I_{CT1}+I_{CT2}+I_{CT3})/3$, and calculating required average input current for phases of the charging pile: $I_{AVG}=P_{OUT}/3/U/\eta$;

S700: setting $I_{CAL1}=I_{LAVG}-I_{CT1}+I_{AVG}$ to make input control current $I_{IN1}=Min(I_{CAL1},I_{RAT})$ for phase A of the charging pile;

S800: determining whether $I_{CAL1}>I_{RAT}$, if so, firstly calculating required average input current for phase B and phase C of the charging pile: $I_{AVG}=I_{AVG}+(I_{CAL1}-I_{RAT})/2$ and then continuing the following steps, and if not, directly continuing the following steps;

S850: setting $I_{CAL2}=I_{LAVG}-I_{CT2}+I_{AVG}$ to make input control current $I_{IN2}=Min(I_{CAL2},I_{RAT})$ for phase B of the charging pile;

S900: determining whether $I_{CAL2}>I_{RAT}$, if so, firstly calculating required input current for phase C of the charging pile: $I_{AVG}=I_{AVG}+(I_{CAL2}-I_{RAT})$ and then continuing the following steps, and if not, directly continuing the following steps; and

S950: setting $I_{CAL3}=I_{LAVG}-I_{CT3}+I_{AVG}$ to make input control current $I_{IN3}=Min(I_{CAL3},I_{RAT})$ for phase C of the charging pile and then returning to the S100, wherein the S100 to the S950 are executed in a continuous loop.

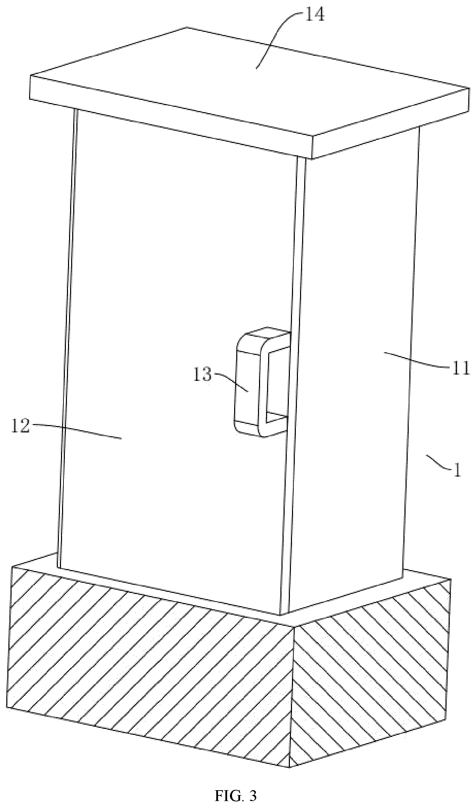

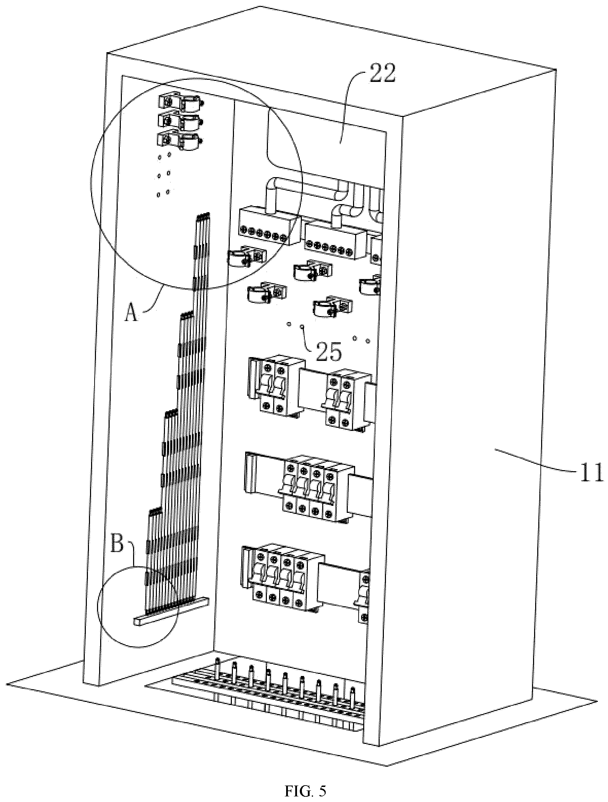

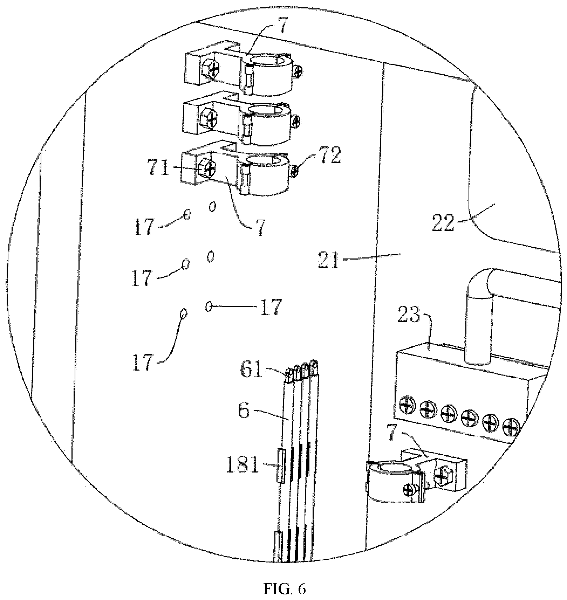

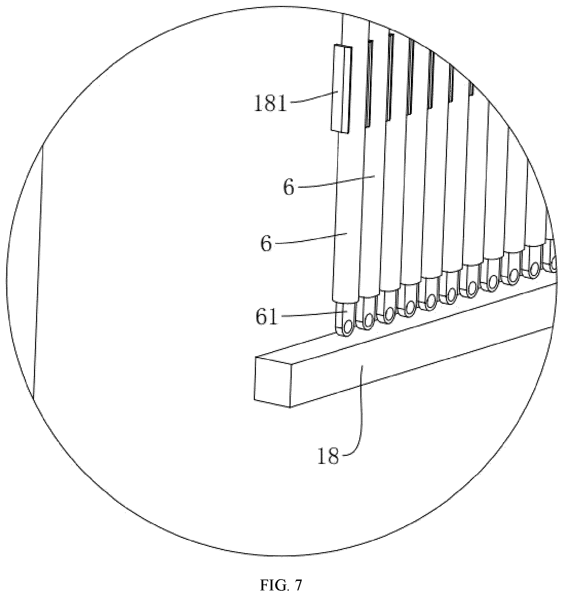

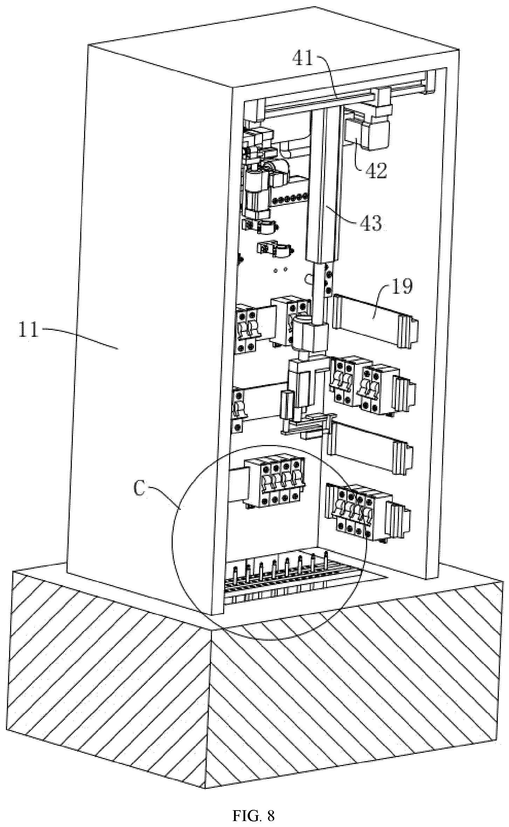

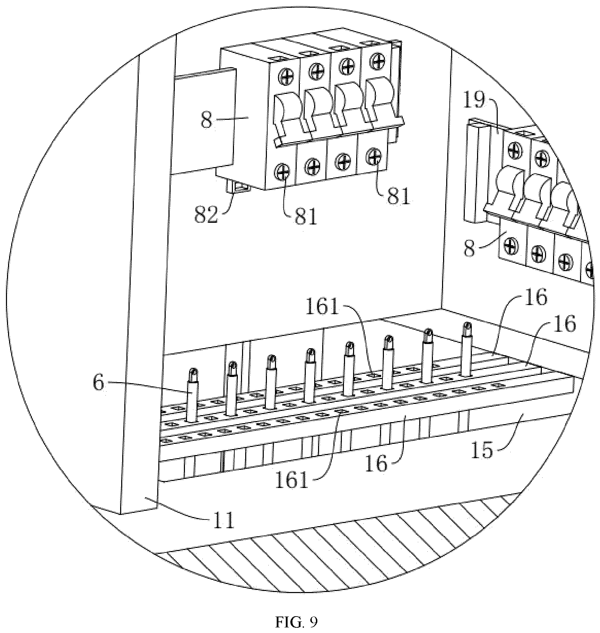

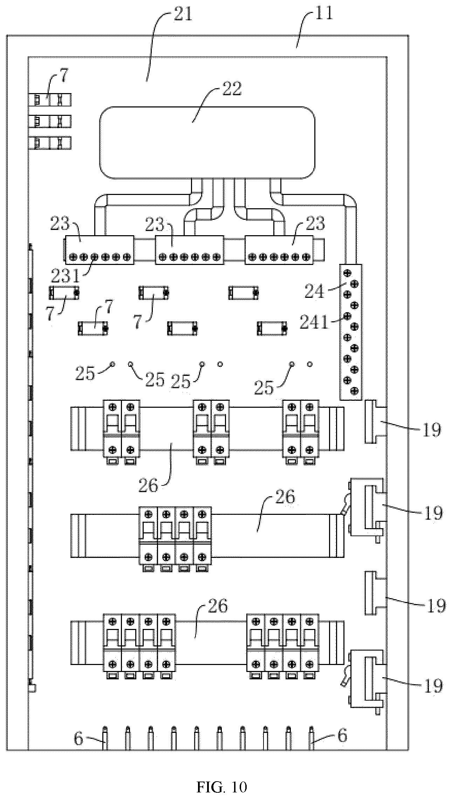

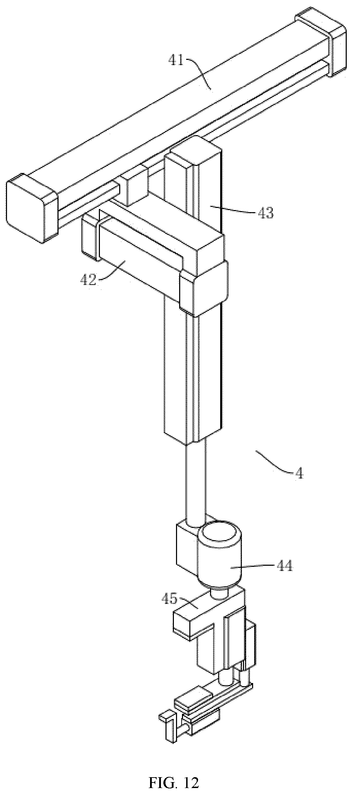

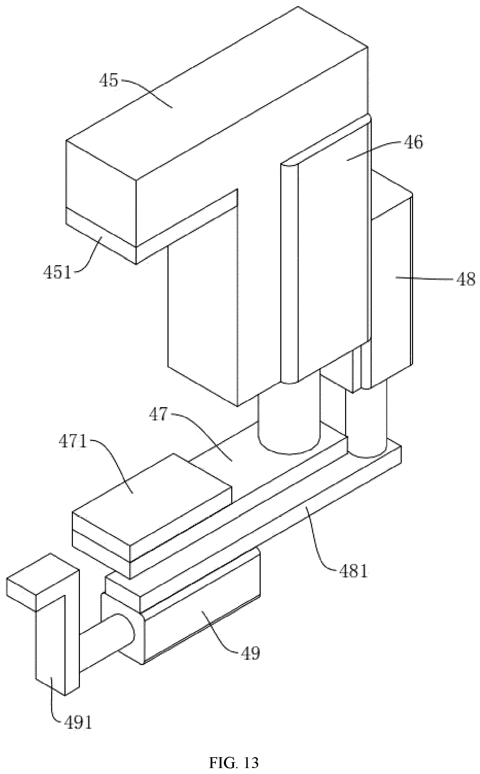

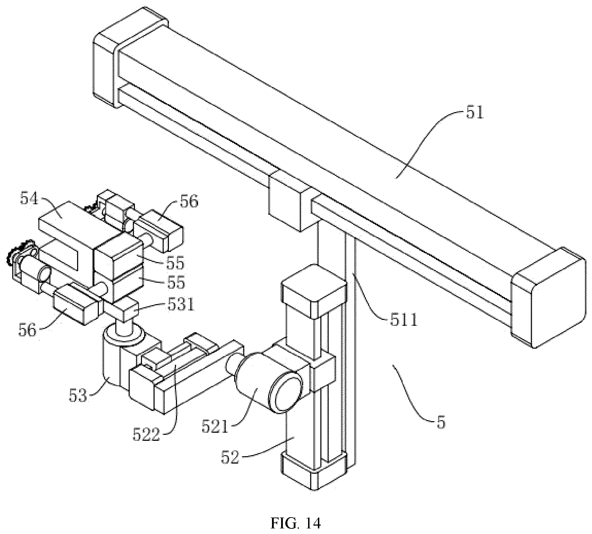

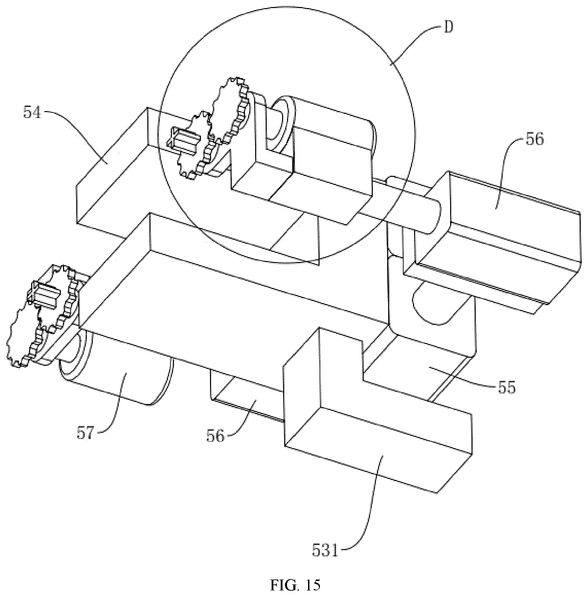

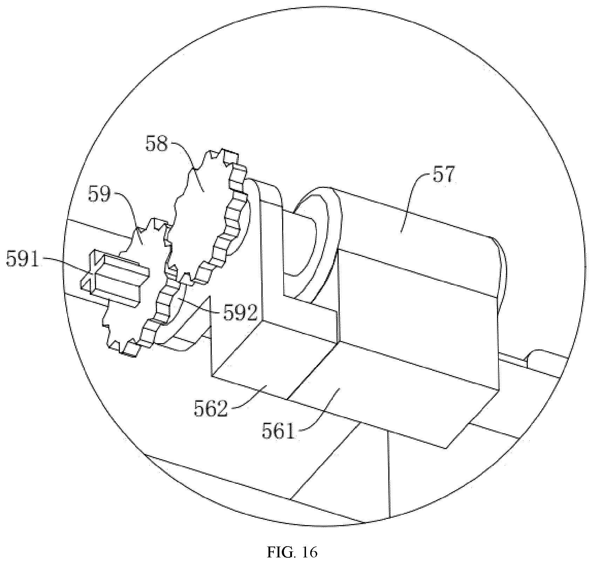

Preferably, as shown in FIGs. 3 to 16, the distribution box in the control system includes a box body 1, a circuit function unit 20, a wiring unit 30, a switch transfer mechanism 4, and a transformer transfer mechanism 5.

As shown in FIGs. 3 to 10, the box body 1 includes a housing 11 fixed on a cement floor, a bottom end and one side surface of the housing 11 are both provided with openings, a box door 12 is assembled at the opening at the side surface of the housing 11, and a handle 13 is arranged on the outer side surface of the box door 12. Specifically, the box door 12 is provided with a door lock, a top plate 14 is arranged at an upper end of the housing 11, a bottom groove 15 is arranged on the cement floor below the opening at the bottom end of the housing 11, a plurality of cable pass-through panels 16 are arranged in the bottom groove 15, a plurality of cable pass-through holes 161 are arranged on the cable pass-through panels 16 and configured to route cables 6 connected to a charging pile and other loads from the distribution box, a plurality of groups of side mounting holes 17 are arranged on one side wall in the housing 11, and each group of side mounting holes 17 are configured to temporarily store one split-core current transformer 7. Specifically, fixing screws 71 of the split-core current transformer 7 are respectively assembled in the side mounting holes 17, a bottom rod 18 is also arranged on one side wall in the housing 11, a plurality of groups of clamping plates 181 are arranged on the bottom rod 18, cables 6 configured to connect devices in the distribution box are clamped on an inner side of each clamping plate 181, and a plurality of side guide rails 19 are arranged on another side wall in the housing 11 and configured to place the air switch 8 not in use temporarily.

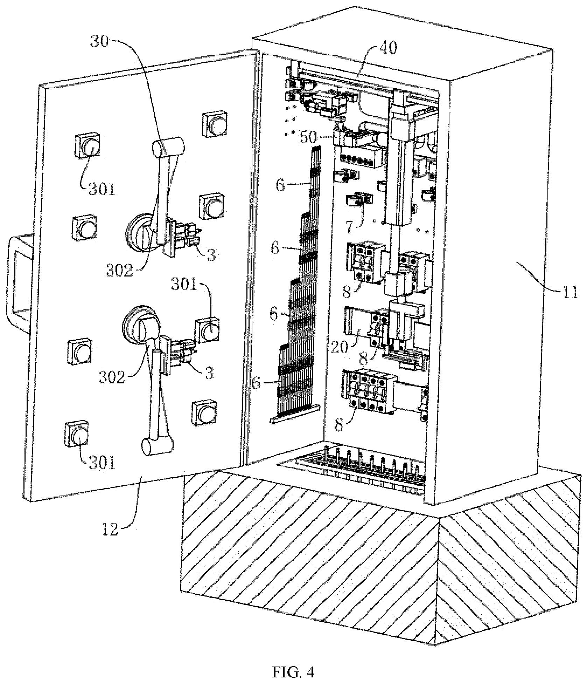

As shown in FIGs. 4 to 10, the circuit function unit 20 is arranged in the box body 1 and is close to an inner end wall of the housing 11, the circuit function unit 20 includes an inner plate 21, a controller 22 is embedded on the inner plate 21, the energy management system is arranged in the controller 22, an input terminal of the controller 22 is connected to a busbar, and the busbar is connected to the controller 22 from the back of the inner plate 21 via the bottom groove 15. Three phase splitters 23 configured to distribute phases of three-phase electricity and a neutral terminal block 24 are connected below the controller 22, a plurality of groups of inner mounting holes 25 are formed below each phase splitter 23 and configured to assemble a split-core current transformer 7, a plurality of inner guide rails 26 are also arranged on the inner plate 21 and configured to assemble the air switch 8, an input terminal of the air switch 8 on each inner guide rail 26 is connected to the phase splitter 23 or the neutral terminal block 24 via a cable 6, and an output terminal of the air switch is connected to the charging pile or other loads via a cable 6.

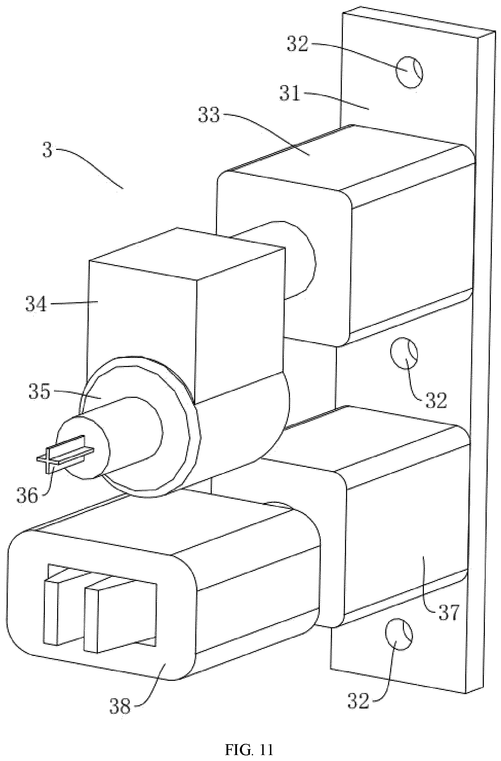

The wiring unit 30 is arranged on an inner side surface of the box door 12 and configured to connect the cables 6 in the distribution box, and includes a plurality of cameras 301 and at least two manipulators 302. The wiring assembly 3 shown in FIG. 11 is arranged at a movable end of the manipulator 302, the wiring assembly 3 includes a mounting plate 31 mounted on the manipulator 302, a mounting hole 32 matching a hole position of the manipulator 302 is formed in the mounting plate 31, a first linear mechanism 33 and a second linear mechanism 37 are arranged at one end of the mounting plate 31, a hanging plate 34 is arranged at an output end of the first linear mechanism 33, a first rotating motor 35 is arranged at a lower end of the hanging plate 34, a first screwdriver bit 36 is arranged at an output end of the first rotating motor 35, and an air clamp 38 is arranged at an output end of the second linear mechanism 37. When the cable 6 in the cable pass-through panel 16 is connected to the air switch 8, the cable 6 is pulled through the air clamp 38 of one wiring assembly 3 and plugged into a wire hole at a lower end of the air switch 8, and then an end hole 61 of the cable 6 is pressed by the pressing screw 81 of the air switch 8 by the first screwdriver bit 36, so that the cable 6 and the air switch 8 are conducted. When the cable 6 in the clamping plate 181 is connected to the air switch 8 from the phase splitter 23 or the neutral terminal block 24, the cable 6 is taken out by the two wiring assemblies 3 together, then the above operations are performed, and the end hole 61 is pressed below the phase splitter screw 231 or the neutral wire screw 241. In addition, a connecting line between the controller 22 and the phase splitter 23 and a connecting line between the controller 22 and the neutral terminal block 24 are assembled in advance, and wiring does not need to be performed by the wiring unit 30.

As shown in FIGs. 4, 8, 12 and 13, the switch transfer mechanism 4 is arranged at a top in the box body 1 and configured to transfer the air switch 8 between an inner side wall of the housing 11 and the circuit function unit 20, and includes a third linear mechanism 41 fixed on a top wall of the box body 1. A fourth linear mechanism 42 perpendicular to a sliding direction is arranged at a lower end of a sliding end of the third linear mechanism, a fifth linear mechanism 43 is vertically arranged at a sliding end of the fourth linear mechanism 42, and a second rotating motor 44 is vertically arranged on one side of a lower end of an output shaft of the fifth linear mechanism 43. A T-shaped frame 45 is arranged at a lower end of an output shaft of the second rotating motor 44, an upper clamping block 451 is arranged at one side of a vertical portion of the T-shaped frame 45, the upper clamping block 451 is attached to a lower end surface of a horizontal portion of the T-shaped frame 45, a sixth linear mechanism 46 is arranged at another side of the vertical portion of the T-shaped frame 45, a first horizontal plate 47 is arranged at a lower end of an output shaft of the sixth linear mechanism 46, a lower clamping block 471 matching the upper clamping block 451 is arranged at an upper end surface of the first horizontal plate 47, the upper clamping block 451 and the lower clamping block 471 are both made of rubber and configured to clamp the air switch 8 from the upper end and the lower end, a seventh linear mechanism 48 is further vertically arranged on one side of the sixth linear mechanism 46, a second horizontal plate 481 is arranged at a lower end of an output shaft of the seventh linear mechanism 48, an eighth linear mechanism 49 is arranged at a lower end of the second horizontal plate 481, an inverted L-shaped block 491 is arranged at an output end of the eighth linear mechanism 49, and a horizontal portion of the inverted L-shaped block 491 matches a latch 82 at a lower end of the air switch 8 and configured to pull down the latch 82, so as to enable the air switch 8 to be separated from the side guide rail 19 or enable the air switch 8 to be assembled to the inner guide rail 26.

As shown in FIGs. 4, 8, and 14 to 16, the transformer transfer mechanism 5 is arranged at a top in the box body 1 and configured to transfer the split-core current transformer 7 between the inner side wall of the housing 11 and the circuit function unit 20, and includes a ninth linear mechanism 51 fixed to the inner top wall of the box body 1. A vertical plate 511 is arranged at a lower end of a sliding end of the ninth linear mechanism, a tenth linear mechanism 52 is vertically arranged at one side of the vertical plate 511, a third rotating motor 521 is arranged at a sliding end of the tenth linear mechanism 52, an eleventh linear mechanism 522 is arranged at an output end of the third rotating motor 521, the eleventh linear mechanism 522 is vertically arranged with the tenth linear mechanism 52, and the eleventh linear mechanism 522 is also vertically arranged with the ninth linear mechanism 51. A fourth rotating motor 53 is vertically arranged at a sliding end of the eleventh linear mechanism 522, an L-shaped frame 531 is arranged at an upper end of an output shaft of the fourth rotating motor 53, a C-shaped plate 54 is arranged at an upper end of a vertical portion of the L-shaped frame 531, two horizontal portions of the C-shaped plate 54 are configured to carry the split-core current transformer 7, a pair of twelfth linear mechanisms 55 with opposite output directions are arranged on an outer side surface of a vertical portion of the C-shaped plate 54, a thirteenth linear mechanism 56 is arranged at an output end of the twelfth linear mechanism 55, a motor base 561 is arranged at an output end of the thirteenth linear mechanism 56, and a fifth rotating motor 57 is arranged on the motor base 561. Specifically, a fifth rotating motor 57 is arranged at an upper end of one motor base 561, a fifth rotating motor 57 is arranged at a lower end of another motor base 561, an L-shaped plate 562 is arranged at one end of the motor base 561, a double rotating base with two round openings is arranged at one end of a vertical portion of the L-shaped plate 562, an output shaft of the fifth rotating motor 57 is rotatably fitted in one round opening of the double rotating base, a first gear 58 is arranged at an output end of the fifth rotating motor 57, a second gear 59 is meshed with the first gear 58, a second screwdriver bit 591 configured to rotate a fixing screw 71 or a split screw 72 of the split-core current transformer 7 is arranged on one end surface of the second gear 59, and a rotating rod 592 rotatably matched with another round opening of the double rotating base is arranged on another end surface of the second gear 59. In addition, the transformer transfer mechanism 5 may also be fitted with the wiring unit 30 to open or close the split-core current transformer 7, that is, the split screw 72 is rotated by the second screwdriver bit 591, after the split-core current transformer 7 is opened, the cable 6 is passed through, then the split-core current transformer 7 is closed, and phase current is monitored. A plurality of cables 6 are connected to phase splitters 23, and the sum of currents measured by the split-core current transformer 7 through which the cables 6 for transmitting in-phase current passes is the phase current used by other loads of the phase, that is, CT1, CT2 or CT3.

Based on the distribution box in the control system of the foregoing preferred embodiment, after the S950 is executed, before returning to the S100, the control method further includes: adding, reducing or replacing a group of devices on the circuit function unit 20 by the wiring unit 30, the switch transfer mechanism 4 and the transformer transfer mechanism 5 at a time interval t.

Specifically, the adding a group of devices on the circuit function unit 20 includes the following steps:

A100: removing the air switch 8 temporarily stored on the side guide rail 19 by the switch transfer mechanism 4, then moving and assembling the air switch to the inner guide rail 26;

A200: pulling out the cable 6 arranged in the cable pass-through panel 16 upwards by the wiring unit 30, and then connecting the cable 6 into a wire hole at a lower end of the air switch 8 in the A100;

A300: if the air switch 8 assembled in the A100 is configured to control at phase input terminals of other loads, executing A310: removing a plurality of split-core current transformers 7 temporarily stored at an outer side of the side mounting hole 17 by the transformer transfer mechanism 5, moving and assembling the split-core current transformers to an outer side of the inner mounting hole 25, opening a movable portion of the split-core current transformer 7 by the wiring unit 30, taking out the cable 6 arranged in the inner side of the clamping plate 181, connecting one end of the cable 6 to a wire hole at an upper end of the air switch 8 and another end to an output terminal of the phase splitter 23, making the cable 6 pass through a fixed portion of the split-core current transformer 7, and then closing the split-core current transformer 7; and

if the air switch 8 assembled in the A100 is configured to control at neutral input terminals of other loads, executing A320: taking out the cable 6 arranged in the inner side of the clamping plate 181 by the wiring unit 30, and then connecting one end of the cable 6 to a wire hole at an upper end of the air switch 8 and another end to an output terminal of the neutral terminal block 24.

Specifically, the reducing a group of devices on the circuit function unit 20 includes the following steps:

> B100: if the air switch 8 in the group of devices is configured to control at phase line input terminals of other loads, executing B110: opening a movable portion of the split-core current transformer 7 by the wiring unit 30, disconnecting one end of a cable 6 in the split-core current transformer 7 from a wire hole at an upper end of the air switch 8 and another end from an output terminal of the phase splitter 23, moving the cable 6 and clamping the cable into an inner side of a group of clamping plates 181, closing the split-core current transformer 7, removing the split-core current transformer 7 from an outer side of the inner mounting hole 25 by the transformer transfer mechanism 5, and then moving and assembling the split-core current transformer to an outer side of the side mounting hole 17;
> if the air switch 8 in the group of devices is configured to control at neutral input terminals of other loads, executing B120: disconnecting one end of a cable 6 from a wire hole at an upper end of the air switch 8 and another end from an output terminal of the neutral terminal block 24 by the wiring unit 30, and then moving the cable 6 and clamping the cable into an inner side of a group of clamping plates 181;
> B200: disconnecting a cable 6 from a wire hole at a lower end of the air switch 8 in the B100 by the wiring unit 30; and
> B300: removing the air switch 8 in the B100 from the inner guide rail 26 by the switch transfer mechanism 4, and then moving and assembling the air switch to the side guide rail 19.

Specifically, the replacing a group of devices on the circuit function unit 20 includes the following steps:

> removing the group of devices on the circuit function unit 20 by the B100-B300; and
> mounting a new group of devices on the circuit function unit 20 by the A100-A300.

In summary, more specifically, the wiring unit 30, the switch transfer mechanism 4 and the transformer transfer mechanism 5 operate in more detailed steps in the above A100-A300 and B100-B300:

1. For the wiring unit 30:
the A200 includes:

> A201: moving the wiring assembly 3 by the manipulator 302;
> A202: clamping the cable 6 by the air clamp 38, then pulling out the cable 6 by the manipulator 302 and insert the cable into the wire hole at the lower end of the air switch 8; and
> A203: turning the clamping screw 81 of the air switch 8 to press the end hole 61 of the cable 6 by the first linear mechanism 33 and the first screwdriver bit 36, so that the cable 6 and the air switch 8 are conducted.

In the A300, the wiring assemblies 3 are moved by two manipulators 302 respectively, then the air clamp 38 of one wiring assembly 3 clamps an upper portion of the cable 6, the air clamp 38 of another wiring assembly 3 clamps a lower portion of the cable 6, and the wiring assembly 3 positioned below connects one end of the cable 6 into a wire hole at the upper end of the air switch 8;

If the A310 is executed, the wiring assembly 3 positioned above connects one end of the cable 6 to the output terminal of the phase splitter 23, and if the A320 is executed, the wiring assembly 3 positioned above connects one end of the cable 6 to the output terminal of the neutral terminal block 24;

Then the cable 6 and the air switch 8/phase splitter 23/neutral terminal block 24 are connected in the manner of the A203.

In the A310 and B110, the wiring unit 30 may also close or open the movable portion of the split-core current transformer 7 by screwing the split screw 72 with the first screwdriver bit 36 and then clamping the movable part of the split-core current transformer 7 with the air clamp 38.

2. For the switch transfer mechanism 4:
In addition to the above descriptions of the embodiment, the switch transfer mechanism 4 includes a first moving assembly 40 having three-axis movement and one-axis rotation functions, the first moving assembly 40 includes the third linear mechanism 41, the fourth linear mechanism 42, the fifth linear mechanism 43, and the second rotating electric machine 44; the T-shaped frame 45 is arranged at the lower end of the first moving assembly 40, and on the basis of that:
the A100 includes:

> A101: moving the upper clamping block 451 and the lower clamping block 471 to the outer side of the air switch 8 of the side guide rail 19 by the first moving assembly 40;
> A102: controlling the opening of the first horizontal plate 47 by the sixth linear mechanism 46, moving the upper clamping block 451 and the lower clamping block 471 to the upper and lower ends of the air switch 8 respectively by the first moving assembly 40, clamping the air switch 8 by the upper clamping block 451 and the lower clamping block 471 with the sixth linear mechanism 46, pushing the horizontal portion of the inverted L-shaped block 491 into the latch 82 by the eighth linear mechanism 49, and pulling the latch 82 down by the seventh linear mechanism 48 to disengage the latch from the side guide rail 19; and

A103: moving and rotating the air switch 8 by the first moving assembly 40 to the outer side of the inner guide rail 26, then releasing the clamping and unlocking the latch 82 to assemble the air switch 8 onto the inner guide rail 26.

The B300 includes:

B301: moving the upper clamping block 451 and lower clamping block 471 to the outer side of the air switch 8 of the inner guide rail 26 by the first moving assembly 40;

B302: disconnecting the air switch 8 from the inner guide rail 26 in the same manner as A102; and

B303: moving and rotating the air switch 8 by the first moving assembly 40 to the outer side of the side guide rail 19, then releasing the clamping and unlocking the latch 82 to assemble the air switch 8 onto the side guide rail 19.

3. For the transformer transfer mechanism 5:
In addition to the above descriptions of the embodiment, the transformer transfer mechanism 5 includes the second moving assembly 50 having three-axis moving and two-axis rotating functions, the second moving assembly 50 includes the ninth linear mechanism 51, the vertical plate 511, the tenth linear mechanism 52, the third rotating motor 521, the eleventh linear mechanism 522, the fourth rotating motor 53, and the L-shaped frame 531; the C-shaped plate 54 is connected to the second moving assembly 50, on the basis that:
In the A310 and the B110, the removing or assembling the split-core current transformer 7 includes the following steps:

moving the C-shaped plate 54 by the second moving assembly 50, so that the split-core current transformer 7 is positioned between two horizontal portions of the C-shaped plate 54, specifically, the inner side surface of the vertical portion of the C-shaped plate 54 abuts against the outer end of the movable portion of the split-core current transformer 7;
adjusting the positions of two second screwdriver bits 591 by two twelfth linear mechanisms 55, pushing the second screwdriver bits 591 into the grooves of the fixing screws 71 by the thirteenth linear mechanism 56, and then rotating the first gear 58 by the fifth rotating motor 57 to drive the second gear 59 to rotate;

If the split-core current transformer 7 is to be removed, the second screwdriver bit 591 unscrews the fixing screw 71, and the second screwdriver bit 591 drives the fixing screw 71 to move out of the side mounting hole 17 or the inner mounting hole 25 by the thirteenth linear mechanism 56; and if the split-core current transformer 7 is to be assembled, the second screwdriver bit 591 screws the fixing screw 71, and the second screwdriver bit 591 drives the fixing screw 71 to move into the side mounting hole 17 or the inner mounting hole 25 by the thirteenth linear mechanism 56.

According to the above operations, in a case that other loads connected to one phase output by the distribution box are added, reduced or replaced, when the S100 is executed next time, the other load currents collected by the phase is a sum of updated currents of the other loads connected to the phase.

Specifically, a remote communication module and a lighting lamp are further arranged in the controller 22, a controller may observe the conditions in the distribution box with the camera 301, and the wiring unit 30, the switch transfer mechanism 4 and the transformer transfer mechanism 5 are remotely controlled for corresponding operations.

In this embodiment, the first linear mechanism 33, the second linear mechanism 37, the fifth linear mechanism 43, the sixth linear mechanism 46, the seventh linear mechanism 48, the eighth linear mechanism 49, the twelfth linear mechanism 55, and the thirteenth linear mechanism 56 all use single-axis linear cylinders. The third linear mechanism 41, the fourth linear mechanism 42, the ninth linear mechanism 51, the tenth linear mechanism 52, and the eleventh linear mechanism 522 all use rodless linear cylinders.

The foregoing are only some of the embodiments listed in the present application and are not intended to limit the present application.

**Claims**

1.  A control method for independently adjusting three-phase current of direct current charging input of an electric vehicle, adopting a control system, wherein the control system comprises a distribution box, the distribution box is connected to a charging pile and other loads, an energy management system for real-time communication with the charging pile is provided in the distribution box, the energy management system is connected to three groups of current transformers configured to monitor phase currents used by other loads, the control method comprises the following steps:

S100: collecting other load currents $I_{CT1}$, $I_{CT2}$ and $I_{CT3}$ for phases of the distribution box by the energy management system, wherein $I_{CT1}$ is equal to a sum of currents for phase A of other loads measured by a first group of current transformers, $I_{CT2}$ is equal to a sum of currents for phase B of other loads measured by a second group of current transformers, and $I_{CT3}$ is equal to a sum of currents for phase C of other loads measured by a third group of current transformers, and calculating available currents for phases of the charging pile: $I_{L1}=I_{MAX}-I_{CT1}$, $I_{L2}=I_{MAX}-I_{CT2}$ and $I_{L3}=I_{MAX}-I_{CT3}$, wherein $I_{MAX}$ is single-phase maximum output current of the distribution box;

S200: communicating the energy management system with the charging pile and outputting $I_{L1}$, $I_{L2}$ and $I_{L3}$ to the charging pile;

S300: calculating input limiting currents for phases by the charging pile separately: $I_{X1}=Min(I_{L1},I_{RAT})$, $I_{X2}=Min(I_{L2},I_{RAT})$, $I_{X3}=Min(I_{L3},I_{RAT})$, wherein $I_{RAT}$ is single-phase rated input current of the charging pile;

S400: calculating actually required output power $P_{OUT}=Min(P_{RAT},P_{REQ})$ of the charging pile, wherein $P_{RAT}$ is rated output power of the charging pile, and $P_{REQ}$ is requested power of the electric vehicle;

S500: calculating available power $P_{DC}$ of the charging pile, determining whether the available power $P_{DC}$ is greater than $P_{OUT}$, if not, taking the input limiting currents $I_{X1}$, $I_{X2}$ and $I_{X3}$ for phases as input control currents $I_{IN1}$, $I_{IN2}$ and $I_{IN3}$ for phases of the charging pile respectively to charge the electric vehicle and then returning to the S100, and if yes, continuing the following steps;

S600: calculating average current of other loads for phases of the distribution box: $I_{LAVG}=(I_{CT1}+I_{CT2}+I_{CT3})/3$, and calculating required average input current for phases of the charging pile: $I_{AVG}=P_{OUT}/3/U/\eta$, wherein $\eta$ is conversion efficiency of the charging pile, and U is line voltage;

S700: setting $I_{CAL1}=I_{LAVG}-I_{CT1}+I_{AVG}$ to make input control current $I_{IN1}=Min(I_{CAL1},I_{RAT})$ for phase A of the charging pile;

S800: determining whether $I_{CAL1}>I_{RAT}$, if so, firstly calculating required average input current for phase B and phase C of the charging pile: $I_{AVG}=I_{AVG}+(I_{CAL1}-I_{RAT})/2$ and then continuing the following steps, and if not, directly continuing the following steps;

S850: setting $I_{CAL2}=I_{LAVG}-I_{CT2}+I_{AVG}$ to make input control current $I_{IN2}=Min(I_{CAL2},I_{RAT})$ for phase B of the charging pile;

S900: determining whether $I_{CAL2}>I_{RAT}$, if so, firstly calculating required input current for phase C of the charging pile: $I_{AVG}=I_{AVG}+(I_{CAL2}-I_{RAT})$ and then continuing the following steps, and if not, directly continuing the following steps; and

S950: setting $I_{CAL3}=I_{LAVG}-I_{CT3}+I_{AVG}$ to make input control current $I_{IN3}=Min(I_{CAL3},I_{RAT})$ for phase C of the charging pile and then returning to the S100, wherein the S100 to the S950 are executed in a continuous loop.

2. The control method for independently adjusting the three-phase current of the direct current charging input of the electric vehicle according to claim 1, wherein the charging pile inputs three-phase alternating current from the distribution box via cables L1, L2 and L3, and outputs direct current to the electric vehicle after the three-phase alternating current is converted by a conversion device.

3. The control method for independently adjusting the three-phase current of the direct current charging input of the electric vehicle according to claim 1, wherein a neutral wire N is connected between the distribution box and the charging pile, and a neutral wire N is also connected between the distribution box and other loads.

4. The control method for independently adjusting the three-phase current of the direct current charging input of the electric vehicle according to claim 1, wherein a control system is grounded via a ground wire PE.

5. The control method for independently adjusting the three-phase current of the direct current charging input of the electric vehicle according to claim 1, wherein $P_{DC}$ is calculated by the following formula:

$$P_{DC}=\eta\times U\times(I_{X1}+I_{X2}+I_{X3})/\sqrt{3} \quad ,$$

wherein $\eta$ is conversion efficiency of the charging pile, and U is line voltage.

6. The control method for independently adjusting the three-phase current of the direct current charging input of the electric vehicle according to claim 1, wherein a number of current transformers in each group of current transformers connected to the energy management system is equal to a number of other loads connected to phases of the distribution box.

7. The control method for independently adjusting the three-phase current of the direct current charging input of the electric vehicle according to claim 6, wherein a current transformer configured to collect other load currents in the S100 is a split-core current transformer (7);

the distribution box in the control system comprises:

a box body (1) comprising a housing (11) fixed on a cement floor, wherein a bottom end and one side surface of the housing (11) are both provided with openings, a box door (12) is assembled at the opening at the side surface of the housing (11), a bottom groove (15) is formed in the cement floor below the opening at the bottom end of the housing (11), a plurality of cable pass-through panels (16) are arranged in the bottom groove (15) and configured to route cables (6) connected to the charging pile and other loads from the distribution box, a plurality of groups of side mounting holes (17) are formed at one side wall in the housing (11), each group of side mounting holes (17) are configured to temporarily store one split-core current transformer (7), a plurality of groups of clamping plates (181) are further arranged on one side wall in the housing (11), cables (6) configured to connect devices in the distribution box are clamped on an inner side of each clamping plate (181), and a plurality of side guide rails (19) are arranged on another side wall in the housing (11) and configured to temporarily store an air switch (8);

a circuit function unit arranged in the box body (1) and close to an inner end wall of the housing (11), wherein the circuit function unit comprises an inner plate (21), a controller (22) is embedded on the inner plate (21), the energy management system is arranged in the controller (22), three phase splitters (23) configured to distribute phases of three-phase electricity and a neutral terminal block (24) are connected below the controller (22), a plurality of groups of inner mounting holes (25) are formed below the phase splitters (23) and configured to assemble the split-core current transformer (7), a plurality of inner guide rails (26) are also arranged on the inner plate (21) and configured to assemble the air switch (8), an input terminal of the air switch (8) on each inner guide rail (26) is connected to the phase splitter (23) or the neutral terminal block (24) via a cable (6), and an output terminal of the air switch is connected to the charging pile or other loads via a cable (6);

a wiring unit arranged on an inner side surface of the box door (12), configured to connect the cables (6) in the distribution box, and comprising a plurality of cameras and at least two manipulators, wherein a wiring assembly (3) is arranged at a movable end of each manipulator;

a switch transfer mechanism (4) arranged at a top in the box body (1) and configured to transfer the air switch (8) between an inner side wall of the housing (11) and a circuit function unit;

a transformer transfer mechanism (5) arranged at a top in the box body (1) and configured to transfer the split-core current transformer (7) between an inner side wall of the housing (11) and a circuit function unit;

after the S950 is executed, before returning to the S100, the control method further comprises:

adding, reducing or replacing a group of devices on the circuit function unit by the wiring unit, the switch transfer mechanism (4) and the transformer transfer mechanism (5) at a time interval t; in a case that other loads connected to one phase output by the distribution box are added, reduced or replaced, when the S100 is executed next time, the other load currents collected by the phase is a sum of updated currents of the other loads connected to the phase;

the adding a group of devices on the circuit function unit comprises the following steps:

A100: removing the air switch (8) temporarily stored on the side guide rail (19) by the switch transfer mechanism (4), then moving and assembling the air switch to the inner guide rail (26);

A200: pulling out the cable (6) arranged in the cable pass-through panel (16) upwards by the wiring unit and then connecting the cable (6) into a wire hole at a lower end of the air switch (8) in the A100;

A300: if the air switch (8) assembled in the A100 is configured to control at phase input terminals of other loads, executing A310: removing a plurality of split-core current transformers (7) temporarily stored at an outer side of the side mounting hole (17) by the transformer transfer mechanism (5), moving and assembling the split-core current transformers to an outer side of the inner mounting hole (25), opening a movable portion of the split-core current transformer (7) by the wiring unit, taking out the cable (6) arranged in the inner side of the clamping plate (181), connecting one end of the cable (6) to a wire hole at an upper end of the air switch (8) and another end to an output terminal of the phase splitter (23), making the cable (6) pass through a fixed portion of the split-core current transformer (7), and then closing the split-core current transformer (7);

if the air switch (8) assembled in the A100 is configured to control at neutral input terminals of other loads, executing A320: taking out the cable (6) arranged in the inner side of the clamping plate (181) by the wiring unit, and then connecting one end of the cable (6) to a wire hole at an upper end of the air switch (8) and another end to an output terminal of the neutral terminal block (24);

the reducing a group of devices on the circuit function unit comprises the following steps:

B100: if the air switch (8) in the group of devices is configured to control at phase line input terminals of other loads, executing B110: opening a movable portion of the split-core current transformer (7) by the wiring unit, disconnecting one end of the cable (6) in the split-core current transformer (7) from a wire hole at an upper end of the air switch (8) and another end from an output terminal of the phase splitter (23), moving the cable (6) and clamping the cable into an inner side of a group of clamping plates (181), closing the split-core current transformer (7), removing the split-core current transformer (7) from an outer side of the inner mounting hole (25) by the transformer transfer mechanism (5), and then moving and assembling the split-core current transformer to an outer side of the side mounting hole (17);

if the air switch (8) in the group of devices is configured to control at neutral input terminals of other loads, executing B120: disconnecting one end of the cable (6) from a wire hole at an upper end of the air switch (8) and another end from an output terminal of the neutral terminal block (24) by the wiring unit, and then moving the cable (6) and clamping the cable into an inner side of a group of clamping plates (181);

B200: disconnecting the cable (6) from a wire hole at a lower end of the air switch (8) in the B100 by the wiring unit;

B300: removing the air switch (8) in the B100 from the inner guide rail (26) by the switch transfer mechanism (4), and then moving and assembling the air switch to the side guide rail (19);

the replacing a group of devices on the circuit function unit comprises the following steps:

removing the group of devices on the circuit function unit by the B100-B300; and

mounting a new group of devices on the circuit function unit by the A100-A300.

8. The control method for independently adjusting the three-phase current of the direct current charging input of the electric vehicle according to claim 7, wherein the switch transfer mechanism (4) comprises a first moving assembly, a T-shaped frame (45) is arranged at a lower end of the first moving assembly, an upper clamping block (451) is arranged on one side of a vertical portion of the T-shaped frame (45), the upper clamping block (451) is attached to a lower end surface of a horizontal portion of the T-shaped frame (45), a sixth linear mechanism (46) is vertically arranged on another side of the vertical portion of the T-shaped frame (45), a first horizontal plate (47) is arranged at a lower end of an output shaft of the sixth linear mechanism (46), a lower clamping block (471) matching the upper clamping block (451) is arranged on an upper end surface of the first horizontal plate (47), the upper clamping block (451) and the lower clamping block (471) are configured to clamp the air switch (8) from the upper end and the lower end, a seventh linear mechanism (48) is also vertically arranged on one side of the sixth linear mechanism (46), a second horizontal plate (481) is arranged at a lower end of an output shaft of the seventh linear mechanism (48), an eighth linear mechanism (49) is arranged at a lower end of the second horizontal plate (481), an inverted L-shaped block (491) is arranged at an output end of the eighth linear mechanism (49), and a horizontal portion of the inverted L-shaped block (491) matches a latch (82) at the lower end of the air switch (8);

the A100 comprises:

A101: moving the upper clamping block (451) and the lower clamping block (471) to the outer side of the air switch (8) of the side guide rail (19) by the first moving assembly;

A102: controlling the opening of the first horizontal plate (47) by the sixth linear mechanism (46), moving the upper clamping block (451) and the lower clamping block (471) to the upper and lower ends of the air switch (8) respectively by the first moving assembly, clamping the air switch (8) by the upper clamping block (451) and the lower clamping block (471) by the sixth linear mechanism (46), pushing the horizontal portion of the inverted L-shaped block (491) into the latch (82) by the eighth linear mechanism (49), and pulling the latch (82) down by the seventh linear mechanism (48) to disengage the latch from the side guide rail (19);

A103: moving and rotating the air switch (8) by the first moving assembly to the outer side of the inner guide rail (26), then releasing the clamping and unlocking the latch (82) to assemble the air switch (8) onto the inner guide rail (26);

the B300 comprises:

B301: moving the upper clamping block (451) and lower clamping block (471) to the outer side of the air switch (8) of the inner guide rail (26) by the first moving assembly;

B302: disconnecting the air switch (8) from the inner guide rail (26) in the same manner as A102; and

B303: moving and rotating the air switch (8) by the first moving assembly to the outer side of the side guide rail (19), then releasing the clamping and unlocking the latch (82) to assemble the air switch (8) onto the side guide rail (19).

9. The control method for independently adjusting the three-phase current of the direct current charging input of the electric vehicle according to claim 7, wherein the transformer transfer mechanism (5) comprises a second moving assembly, the second moving assembly is connected to a C-shaped plate (54), a pair of twelfth linear mechanisms (55) arranged in opposite output directions are arranged on an outer side surface of a vertical portion of the C-shaped plate (54), a thirteenth linear mechanism (56) is arranged at an output end of each twelfth linear mechanism (55), a fifth rotating motor (57) is arranged at an output end of the thirteenth linear mechanism (56), a first gear (58) is arranged at an output terminal of the fifth rotating motor (57), the first gear (58) is meshed with a second gear (59), and one end surface of the second gear (59) is provided with a second screwdriver bit (591) for rotating a fixing screw (71) or a split screw (72) of the split-core current transformer (7);

in the A310 and the B110, the removing or assembling the split-core current transformer (7) comprises the following steps:

moving the C-shaped plate (54) by the second moving assembly, so that the split-core current transformer (7) is positioned between two horizontal portions of the C-shaped plate (54), specifically, an inner side surface of the vertical portion of the C-shaped plate 54 abuts against an outer end of the movable portion of the split-core current transformer (7);

adjusting the positions of two second screwdriver bits (591) by two twelfth linear mechanisms (55), pushing the second screwdriver bits (591) into the grooves of the fixing screws (71) by the thirteenth linear mechanism (56), and then rotating the first gear (58) by the fifth rotating motor (57) to drive the second gear (59) to rotate;

If the split-core current transformer (7) is to be removed, the second screwdriver bit (591) unscrews the fixing screw (71), and the second screwdriver bit (591) drives the fixing screw (71) to move out of the side mounting hole (17) or the inner mounting hole (25) by the thirteenth linear mechanism (56); and if the split-core current transformer (7) is to be assembled, the second screwdriver bit (591) screws the fixing screw

(71), and the second screwdriver bit (591) drives the fixing screw (71) to move into the side mounting hole (17) or the inner mounting hole (25) by the thirteenth linear mechanism (56).

FIG. 1

FIG. 2

$$( \text{Start} )$$

Collect other load currents $I_{CT1}$, $I_{CT2}$ and $I_{CT3}$ for phases of the distribution box by the energy management system, and calculate available currents for phases of the charging pile: $I_{L1}=I_{MAX}-I_{CT1}$, $I_{L2}=I_{MAX}-I_{CT2}$, $I_{L3}=I_{MAX}-I_{CT3}$

Communicate the energy management system with the charging pile and output $I_{L1}$, $I_{L2}$ and $I_{L3}$ to the charging pile

Calculate input limiting currents for phases by the charging pile separately: $I_{X1}=Min(I_{L1},I_{RAT})$, $I_{X2}=Min(I_{L2},I_{RAT})$, $I_{X3}=Min(I_{L3},I_{RAT})$

Calculate actually required output power $P_{OUT}=Min(P_{RAT},P_{REQ})$ of the charging pile

Take the input limiting currents $I_{X1}$, $I_{X2}$ and $I_{X3}$ for phases as input control currents $I_{IN1}$, $I_{IN2}$ and $I_{IN3}$ for phases of the charging pile respectively to charge the electric vehicle

$\xleftarrow{\text{No}}$ Calculate available power $P_{DC}$ of the charging pile, and determine whether the available power is greater than $P_{OUT}$

Yes

Calculate average current of other loads for phases of the distribution box: $I_{LAVG}=(I_{CT1}+I_{CT2}+I_{CT3})/3$, and calculate required average input current for phases of the charging pile: $I_{AVG}=P_{OUT}/3/U/\eta$

Set $I_{CAL1}=I_{LAVG}-I_{CT1}+I_{AVG}$ to make input control current $I_{IN1}=Min(I_{CAL1},I_{RAT})$ for phase A of the charging pile

Calculate required average input current for phase B and phase C of the charging pile: $I_{AVG}=I_{AVG}+(I_{CAL1}-I_{RAT})/2$

$\xleftarrow{\text{Yes}}$ $I_{CAL1}>I_{RAT}$

No

Set $I_{CAL2}=I_{LAVG}-I_{CT2}+I_{AVG}$ to make input control current $I_{IN2}=Min(I_{CAL2},I_{RAT})$ for phase B of the charging pile

Calculate required input current for phase C of the charging pile: $I_{AVG}=I_{AVG}+(I_{CAL2}-I_{RAT})$

$\xleftarrow{\text{Yes}}$ $I_{CAL2}>I_{RAT}$

No

Set $I_{CAL3}=I_{LAVG}-I_{CT3}+I_C$ to make input control current $I_{IN3}=Min(I_{CAL3},I_{RAT})$ for phase C of the charging pile

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

Europäisches
Patentamt

European
Patent Office

Office européen
des brevets

# EUROPEAN SEARCH REPORT

**Application Number**

EP 25 17 6515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 782 849 A2 (ZAPTEC IP AS [NO]) 24 February 2021 (2021-02-24) * paragraphs [0044] - [0057], [0080]; figures 1-7 * | 1-5 | INV. B60L53/10 B60L53/62 B60L53/63 H02J3/26 H02J7/04 |
| A | CN 115 549 132 A (XIAN TELAIDIAN LINGCHONG NEW ENERGY TECH CO LTD) 30 December 2022 (2022-12-30) * paragraphs [0018], [0024], [0065] - [0134]; figures 1-5 * | 1-5 | |
| A | CN 113 690 909 A (GUOCHUANG MOBILE ENERGY INNOVATION CENTER JIANGSU CO LTD) 23 November 2021 (2021-11-23) * paragraphs [0026] - [0040], [0051]; figures 1-4 * | 1-5 | |
| A | CN 112 060 962 A (WU BAIFA) 11 December 2020 (2020-12-11) * pages 7-8; figure 1 * | 1-5 | |

| | TECHNICAL FIELDS SEARCHED (IPC) |
|---|---|
| | B60L H02J |

The present search report has been drawn up for all claims

| Place of search | Date of completion of the search | Examiner |
|---|---|---|
| The Hague | 7 October 2025 | Schury, Dominik |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**Application Number**

EP 25 17 6515

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-5

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

The Search Division considers that the present European patent application does not comply with the requirements of unity of invention and relates to several inventions or groups of inventions, namely:

```
1. claims: 1-5

        Group 1: The independent claim as well as the dependent
        claims 2 - 5 describe a method for balancing the currents of
        a three phase system by controlling the charging station
        currents.
        > Feature: Controlling the phase currents of a charging
        system
        > Technical effect: Balancing the load among different
        phases
        > Objective technical problem: How to balance the loads of
        the different phases?
                            ---


2. claims: 6-9

        Group 2: The independent claim as well as the dependent
        claim 6 - 9 describe a method for extending a balancing
        system to multiple loads.
        > Feature: Extending the Balancing system
        > Technical effect:Balancing system works with a plurality
        of loads
        > Objective technical problem: How to extend the balancing
        system?
                            ---
```

## ANNEX TO THE EUROPEAN SEARCH REPORT
## ON EUROPEAN PATENT APPLICATION NO.

EP 25 17 6515

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2025

| Patent document cited in search report | | Publication date | Patent family member(s) | Publication date |
|---|---|---|---|---|
| EP 3782849 | A2 | 24-02-2021 | NONE | |
| CN 115549132 | A | 30-12-2022 | NONE | |
| CN 113690909 | A | 23-11-2021 | NONE | |
| CN 112060962 | A | 11-12-2020 | NONE | |

EPO FORM P0459

For more details about this annex : see Official Journal of the European Patent Office, No. 12/82